# EUROPEAN PATENT SPECIFICATION

(11) **EP 2 938 005 B1**
(45) Date of publication and mention of the grant of the patent: **25.07.2018**
(21) Application number: 15164510.8
(22) Date of filing: 21.04.2015
(51) Int. Cl.: H04B 3/56

(54) **POWER LINE COMMUNICATION (PLC) SIGNAL PASS-THROUGH DEVICE AND PLC SIGNAL TRANSMISSION LINE THEREFOR**
SIGNALDURCHGANGSVORRICHTUNG FÜR STROMLEITUNGSKOMMUNIKATION (SPS) UND PLC-SIGNAL-ÜBERTRAGUNGSLEITUNG DAFÜR
DISPOSITIF DE TRANSFERT DE SIGNAL DE COMMUNICATION DE LIGNE D'ALIMENTATION ET LIGNE DE TRANSMISSION DE SIGNAL ASSOCIÉE

(30) Priority: 22.04.2014 CN 201420197758 U
(43) Date of publication of application: 28.10.2015
(73) Proprietor: Sercomm Corporation, Taipei 115 (TW)
(72) Inventor: Shen, Yu-Li, 115 Taipei (TW); Yu, Yuan-Yuan, 215021 Suzhou Industrial Park (CN)
(74) Representative: dompatent von Kreisler Selting Werner - Partnerschaft von Patent- und Rechtsanwälten mbB

(56) References cited:
- US-A1- 2012 294 342

## Description

### TECHNICAL FIELD

The disclosure is related to a power line communication (PLC) signal pass-through device and a PLC signal transmission line therefor.

### BACKGROUND

In a power line communication (PLC) signal pass-through system, the existing power line may be used to transmit data. Because the existing power line in a house is used as a data transmission medium, transmission of data is neither attenuated nor blocked by the walls of the building, and the cost is lower. The PLC signal pass-through system has received attention. Thus, how to improve the transmission efficiency of the PLC signal pass-through system is one of the major issues.

US 2012/0294342 A1 discloses a power line communication modem comprising a T-style coupler for coupling the first and second signal to the respective wires.

### SUMMARY

The disclosure is directed to a power line communication (PLC) signal pass-through device and a PLC signal transmission line therefor, wherein four data wires of the PLC signal transmission line are grouped into two twist pairs, and each of the two twist pairs is for transmitting a respective data stream.

According to one embodiment of the disclosure, a power line communication (PLC) signal pass-through device is characterized in that it includes a PLC adaptor; and a PLC signal transmission line, coupled to the PLC adaptor. The PLC signal transmission line includes a plurality of data wires, the data wires are grouped into a plurality of twist pairs, and the twist pairs transmit a plurality of data streams, respectively.

In an embodiment of the disclosure, the PLC signal transmission line between the PLC adaptor and the modem includes 4 data wires which are grouped into two twist pairs, and each twist pair transmits a data stream, respectively. Therefore, the PLC signal transmission line may transmit more data streams for improving the transmission efficiency. Besides, because each of the twist pairs is protected by the respective protection element, signals transmitted on the twist pairs may be not seriously interfered or influenced.

### BRIEF DESCRIPTION OF THE DRAWINGS

FIG. 1 shows a PLC signal pass-through device in a house.
FIG. 2 shows connection of a PLC signal transmission line and a PLC adaptor according to an embodiment of the disclosure.
FIG. 3 is a part of a magnetic core of a PLC adaptor.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

The structure principle and the operation principle of the embodiment of the disclosure are described in the following description by referring the Figures.

Each of the disclosed embodiments has one or more technical features. In possible implementation, one skilled person in the art would selectively implement part or all technical features of any embodiment of the disclosure or selectively combine part or all technical features of the embodiments of the disclosure.

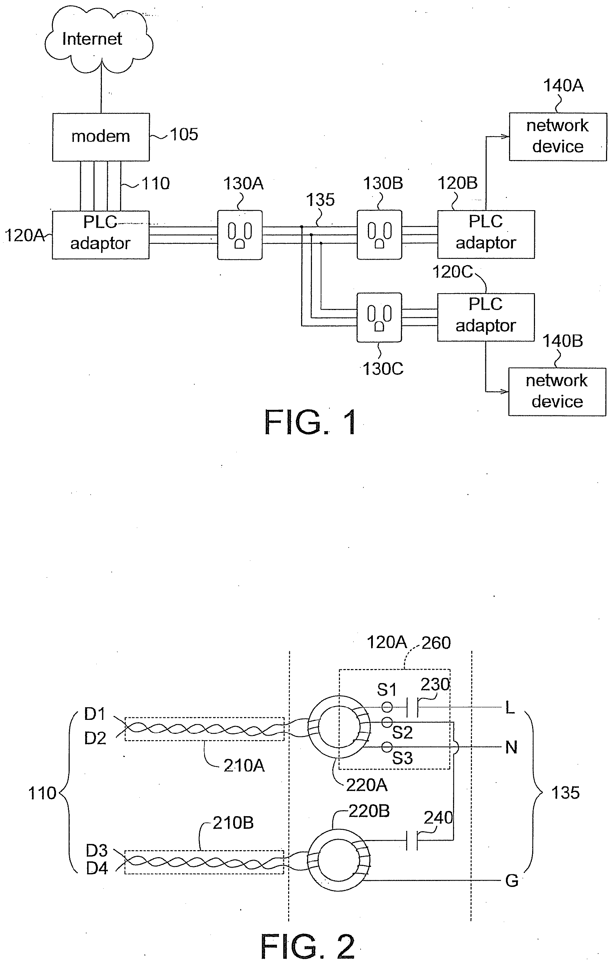

Refer to FIG. 1 which shows a power line communication (PLC) signal pass-through device in a house. As shown in FIG. 1, a modem (for example, an ADSL (Asymmetric Digital Subscriber Line) modem) 105 may be connected to outside Internet. The modem 105 is coupled to a PLC adaptor 120A via a PLC signal transmission line 110. In the embodiment of the disclosure, the PLC signal transmission line 110 includes four data wires. The details are described in the following.

A plug of the PLC adaptor 120A may be inserted into an AC (alternating-current) power socket 130A. The AC power socket 130A may be coupled to other AC power sockets 130B-130C via a power line 135 which is usually a power line buried in the wall and includes three power conductors. A plug of the PLC adaptor 120B may be inserted into the power socket 130B; and a plug of the PLC adaptor 120C may be inserted into the power socket 130C.

Network devices 140A and 140B may be coupled to the PLC adaptors 120B and 120C, respectively. The network devices 140A and 140B may be devices having networking functions, for example but not limited to, a personal computer (PC), a network phone, a digital set top box (STB), a digital networking television (TV), a networking camera, a wireless networking base station and so on. The network devices 140A and 140B may be coupled to the modem 105 via the PLC adaptors 120B-120C, the AC power sockets 130B-130C, the power line 135, the AC power socket 130A, the PLC adaptor 120A and the PLC signal transmission line 110, for connecting to the outside Internet.

Refer to FIG. 2 which shows connection of the PLC signal transmission line 110 and the PLC adaptor 120A according to an embodiment of the disclosure. As shown in FIG. 2, the PLC signal transmission line 110 includes four data wires D1-D4. The four data wires D1-D4 are grouped into two twist pairs, and the two twist pairs transmit two data streams, respectively. The data wires D1 and D2 form one of the twist pairs, and the data wires D3 and D4 form the other one of the twist pairs.

The PLC signal transmission line 110 further includes two protection elements 210A and 210B for wrapping the two twist pairs, respectively. For example, the protection element 210A wraps the twist pair (formed by the data wires D1 and D2), and the protection element 210B wraps the other twist pair (formed by the data wires D3 and D4). The protection elements 210A and 210B may be copper foil, for example, to protect the inside twist pair from electromagnetic interference.

As shown in FIG. 2, the PLC adaptor 120A may include two magnetic cores 220A and 220B, and capacitors 230 and 240. The magnetic cores 220A and 220B may be used for isolating the PLC signal transmission line 110 from the power line 135, and may be used for signal coupling between the PLC signal transmission line 110 and the power line 135. The two twist pairs (formed by the data wires D1-D4) are wrapped on the corresponding magnetic cores 220A and 220B, respectively.

Although not shown in FIGs. 1 and 2, the PLC adaptor 120A may include other elements, for example, an analog front end (AFE), a digital front end (DFE), a transforming circuit for transforming AC voltage into DC (direct current) voltage (which transforms the AC voltage on the power line 135 into a DC voltage, for providing DC voltage to the modem 105, e.g. via the PLC signal transmission line 110). In the embodiment of the disclosure, the PLC signal transmission line 110 includes four data wires D1-D4, and the design of the socket of the PLC adaptor 120A (for receiving the PLC signal transmission line 110) is suitable for this.

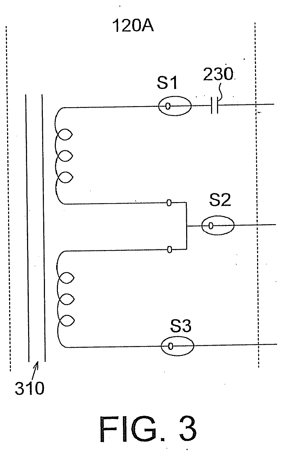

FIG. 3 is a part (which is shown in the dotted-line block 260) of the magnetic core 220A. As shown in FIG. 3, in practice application, any one of the magnetic cores 220A and 220B may be implemented by a two-winding transformer 310. A terminal of a first winding of the two-winding transformer 310 of the magnetic core 220A may be coupled to a live wire L of the power line 135 through the capacitor 230. Another terminal of the first winding and a terminal of the second winding of the two-winding transformer 310 may be connected together and then coupled to the two-winding transformer (not shown) of the magnetic core 220B through the capacitor 240. Another terminal of the second winding of the two-winding transformer 310 may be coupled to a neutral wire N of the power line 135.

In FIG. 2 and FIG. 3, three nodes S1-S3 are shown to illustrate how to implement the coupling between the magnetic core 220A and the power line 135 in FIG. 2 as the coupling between the two-winding transformer 310 and the power line 135. That is, in FIG. 2, the node S1 refers to a connection node between the magnetic core 220A and the live wire L (via the capacitor 230); the node S2 refers to a connection node between the magnetic cores 220A and 220B (via the capacitor 240); and the node S3 refers to a connection node between the magnetic core 220A and the neutral wire N. In FIG. 3, the node S1 refers to a connection node between the two-winding transformer 310 and the live wire L (via the capacitor 230); the node S2 refers to a connection node between the two-winding transformer 310 and a two-winding transformer (not shown) of another magnetic core (via the capacitor 240); and the node S3 refers to a connection node between the two-winding transformer 310 and the neutral wire N.

The magnetic core 220B has the similar structure as the magnetic core 220A. As shown in FIG. 3, the difference between the magnetic core 220B and the magnetic core 220A is that, the two winding of the magnetic core 220A are short-circuited and then connected to the node S2, and the two winding of the magnetic core 220B are short-circuited without connection to an external node.

As described above, in the embodiment of the disclosure, the PLC signal transmission line between the PLC adaptor and the modem includes 4 data wires which are grouped into two twist pairs, and each twist pair transmits a data stream, respectively. Therefore, the PLC signal transmission line may transmit more data streams for improving the transmission efficiency. Besides, because each of the twist pairs is protected by the respective protection element, signals transmitted on the twist pairs may be not seriously interfered or influenced.

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. A power line communication (PLC) signal pass-through device, wherein the PLC signal pass-through device comprises,
a PLC adaptor (120A); and
a PLC signal transmission line (110), coupled to the PLC adaptor, the PLC signal transmission line including a plurality of data wires (D1-D4),
**characterized in that**
the data wires are grouped into a plurality of twist pairs, and the twist pairs transmit a plurality of data streams, respectively;
the PLC adaptor (120A) comprises a first magnetic core (220A), a second magnetic core (220B), and a capacitor (240) coupled between the first magnetic core (220A) and the second magnetic core (220B).

2. The PLC signal pass-through device according to claim 1, **characterized in that**,
the PLC signal transmission line further includes a plurality of protection elements (210A, 210B), and each protection element wraps a respective one of the twist pairs.

3. The PLC signal pass-through device according to claim 1, **characterized in that**,
the PLC signal transmission line includes four data wires;
two of the four data wires are in one of the twist pairs; and
the other two of the four data wires are in the other one of the twist pairs.

4. The PLC signal pass-through device according to claim 1, **characterized in that**,
the PLC signal transmission line includes four data wires;
two of the four data wires are in one of the twist pairs and wrapped inside a protection element (210A, 210B); and
the other two of the four data wires are in the other one of the twist pairs and wrapped inside another protection element (210A, 210B).

5. The PLC signal pass-through device according to claim 1, **characterized in that**,
the PLC adaptor includes a plurality of magnetic cores (220A, 220B) and each of the twist pairs wraps on the corresponding magnetic core.

## Patentansprüche

1. Signaldurchgangsvorrichtung für Stromleitungskommunikation (PLC), wobei die PLC-Signaldurchgangsvorrichtung umfasst
einen PLC-Adapter (120A); und
eine PLC-Signalübertragungsleitung (110), die mit dem PLC-Adapter gekoppelt ist, wobei die PLC-Signalübertragungsleitung eine Vielzahl von Datenleitungen (D1-D4) aufweist,
**dadurch gekennzeichnet, dass**
die Datenleitungen zu einer Vielzahl von Twisted-Pairs zusammengefasst sind und die Twisted-Pairs jeweils eine Vielzahl von Datenströmen übertragen;
der PLC-Adapter (120A) einen ersten Magnetkern (220A), einen zweiten Magnetkern (220B) und einen Kondensator (240) umfasst, der zwischen dem ersten Magnetkern (220A) und dem zweiten Magnetkern (220B) gekoppelt ist.

2. PLC-Signaldurchgangsvorrichtung nach Anspruch 1, **dadurch gekennzeichnet, dass**
die PLC-Signalübertragungsleitung ferner eine Vielzahl von Schutzelementen (210A, 210B) aufweist und jedes Schutzelement ein jeweiliges eines der Twisted-Pairs umwickelt.

3. PLC-Signaldurchgangsvorrichtung nach Anspruch 1, **dadurch gekennzeichnet, dass**
die PLC-Signalübertragungsleitung vier Datenleitungen aufweist;
zwei der vier Datenleitungen sich in einem der Twisted-Pairs befinden; und die anderen zwei der vier Datenleitungen sich in dem anderen der Twisted-Pairs befinden.

4. PLC-Signaldurchgangsvorrichtung nach Anspruch 1, **dadurch gekennzeichnet, dass**
die PCL-Signalübertragungsleitung vier Datenleitungen aufweist;
zwei der vier Datenleitungen sich in einem der Twisted-Pairs befinden und in ein Schutzelement (210A, 210B) gewickelt sind; und
die anderen zwei der vier Datenleitungen sich in dem anderen der Twisted-Pairs befinden und in ein anderes Schutzelement (210A, 210B) gewickelt sind.

5. PLC-Signaldurchgangsvorrichtung nach Anspruch 1, **dadurch gekennzeichnet, dass**
der PLC-Adapter eine Vielzahl von Magnetkernen (220A, 220B) aufweist und jedes der Twisted-Pairs an den entsprechenden Magnetkern gewickelt ist.

## Revendications

1. Dispositif de transmission de signal de communication par courant porteur en ligne (CPL), dans lequel le dispositif de transmission de signal CPL comprend,
un adaptateur CPL (120A) ; et
une ligne de transmission de signal CPL (110), couplée à l'adaptateur CPL, la ligne de transmission de signal CPL incluant une pluralité de fils de données (D1 à D4),
**caractérisé en ce que**
les fils de données sont regroupés en une pluralité de paires torsadées, et les paires torsadées transmettent une pluralité de flux de données, respectivement ;
l'adaptateur CPL (120A) comprend un premier noyau magnétique (220A), un second noyau magnétique (220B), et un condensateur (240) couplé entre le premier noyau magnétique (220A) et le second noyau magnétique (220B).

2. Dispositif de transmission de signal CPL selon la revendication 1, **caractérisé en ce que**,
la ligne de transmission de signal CPL inclut en outre une pluralité d'éléments de protection (210A, 210B), et chaque élément de protection enveloppe l'une respective des paires torsadées.

3. Dispositif de transmission de signal CPL selon la revendication 1, **caractérisé en ce que**,
la ligne de transmission de signal CPL inclut quatre fils de données ;
deux des quatre fils de données sont dans l'une des paires torsadées ; et
les deux autres des quatre fils de données sont dans l'autre des paires torsadées.

4. Dispositif de transmission de signal CPL selon la revendication 1, **caractérisé en ce que**,
la ligne de transmission de signal CPL inclut quatre fils de données ;
deux des quatre fils de données sont dans l'une des paires torsadées et enveloppés à l'intérieur d'un élément de protection (210A, 210B); et
les deux autres des quatre fils de données sont dans l'autre des paires torsadées et enveloppés à l'intérieur d'un autre élément de protection (210A, 210B).

5. Dispositif de transmission de signal CPL selon la revendication 1, **caractérisé en ce que**,
l'adaptateur CPL inclut une pluralité de noyaux magnétiques (220A, 220B) et chacune des paires torsadées s'enveloppe sur le noyau magnétique correspondant.
